# EUROPEAN PATENT SPECIFICATION

(11) **EP 3 814 410 B1**
(45) Date of publication and mention of the grant of the patent: **22.05.2024**
(21) Application number: 19745361.6
(22) Date of filing: 25.06.2019
(51) Int. Cl.: C08J 7/04, B32B 27/32, B32B 27/08, B32B 27/36, C08J 7/048, C08J 7/052

(54) **COATED FILMS AND ARTICLES FORMED FROM SAME**
BESCHICHTETE FOLIEN UND DARAUS GEFORMTE ARTIKEL
FILMS REVÊTUS ET ARTICLES FORMÉS À PARTIR DE CEUX-CI

(30) Priority: 29.06.2018 US 201862692179 P
(43) Date of publication of application: 05.05.2021
(73) Proprietor: Dow Global Technologies LLC, Midland, MI 48674 (US); Dow Brasil Sudeste Industrial Ltda., 04794-000 São Paulo SP (BR); Rohm and Haas Company, Collegeville, PA 19426 (US)
(72) Inventor: CIPRO, Mateus Batista Torres, 13214-730 Jundiaí (BR); CASARRUBIAS, Juan Carlos, Toluca, 06500 (MX); GOMES, Jorge Caminero, 13214-730 Jundiaí (BR); MAZZOLA, Nicolas Cardoso, 13214-730 Jundiaí (BR); CESARIO, Thais Regina Ribeiro, 04794-000 Sao Paulo/Sp (BR)
(74) Representative: Boult Wade Tennant LLP
(86) International application number: PCT/US2019/038966
(87) International publication number: WO 2020/005927

(56) References cited:
- WO-A1-2016/196168
- US-A1- 2001 011 114
- US-A1- 2005 271 881
- US-A1- 2015 240 076
- US-B1- 8 114 485
- DATABASE WPI Week 201745 Thomson Scientific, London, GB; AN 2017-32662F XP002794015, -& CN 106 674 464 A (SHANGHAI HUIDE TECHNOLOGY CO LTD) 17 May 2017 (2017-05-17)

## Description

### Field

The present invention relates to coated films that can be used in articles. Such coated films can be particularly useful in food packages such as stand-up pouches.

### Introduction

For years, many types of flexible and semi-rigid packaging created to protect food, liquids, personal care items, and other consumer products have been manufactured with a structure that typically combines polyester and/or polypropylene layer(s) with polyethylene films using reactive polyurethane adhesive to make a laminate of the various layers. The same type of lamination may also be made using extrusion or thermal lamination techniques using various polyolefin extrudate or other thermally active polymers. Such film structures combine the surface finish (gloss or matte), stiffness, thermal resistance, and oxygen barrier properties of polyester and/or polypropylene layers with the water vapor barrier, mechanical, and sealing properties of polyethylene layers. In addition, some packages include metal foil layers, paperboard layers, and other layers. Of course, the barrier properties (resistance (or lack of resistance) to oxygen and water vapor transmission) can be selected based on the type of product to be packaged through the selection of individual layers of the final package.

While such packages combine a number of properties, one of the primary challenges of such packages is the many conversion and fabrication steps that can be required to manufacture the package. Another challenge with such mixed material packages is the disposal of such packages. With such packages being made up of mixed plastics and/or metal foils and/or paperboard, the packages are usually discarded as waste due to the incompatibility for recycling of these materials, though thermal energy recovery may be an option through incineration and heat recovery.

It would thus be desirable to have new coated films and related materials for use in packages that provide necessary properties and function and allow ease of recycling or thermal energy recovery. It would also be desirable to have new coated films and related materials for use in packages that combine a high sealing temperature ranges with a matte surface finish.

WO2016/196168 A1 relates to coated films and packages formed from such films.

CN 106 674 464 A relates to polyurethane resin for OPP (O-Phenylphenol) membrane coating.

US 2001/0011114 A1 relates to a polyolefin product can be coated with a matte, uniform coating.

### Summary

The present invention provides coated films having a polyurethane coating that advantageously provides a matte surface finish. In some embodiments, the present invention provides coated films that advantageously combine polyolefin-based films (including monolayer and multi-layer films, with and without lamination) with a polyurethane coating that advantageously provide a matte finish with an improved compatibility/recyclability profile. In some embodiments, the present invention provides coated films for packages that have sealing temperature ranges and a matte finish that are comparable to polyester or polypropylene-based films but that can be produced in simplified manufacturing processes. For example, in some embodiments, the polyurethane coating can be applied to an outer surface of a polyolefin-based film in-line (e.g., following extrusion) to provide the coated films. In some embodiments, the present invention advantageously simplifies film production processes for packaging and minimizes the use of incompatible materials that cause difficulties in recycling.

In one aspect, the present invention provides a coated film that comprises a film and a coating on an outer surface of the film comprising polyurethane and a plurality of [(trimethylsilyl)oxy]-modified silica particles, wherein the coating comprises 1.2 to 6.5 weight percent of the [trimethylsilyl)oxy]-modified silica particles based on the total weight of the dry coating. In some embodiments, the coated outer surface of the film has a gloss of 11 units or less when measured at 45° in accordance with ASTM D2457. The film, in some embodiments, comprises polyethylene, polypropylene, or a combination thereof. In some embodiments, the coated film is thermally resistant under the sealing conditions of ASTM F1921-98 over a temperature range of 80° C to 200° C, and/or has a gloss of at least 70 units at 60°. Such temperature ranges can facilitate the use of such coated films in form fill and seal packaging processes with minimal detriment on productivity.

In a second aspect, the present invention provides articles (e.g., flexible packages, pouches, stand-up pouches, bags, etc.) comprising any of the inventive coated films disclosed herein.

In a third aspect, the present invention provides laminated comprising any of the inventive coated films disclosed herein.

These and other embodiments are described in more detail in the Detailed Description.

### Brief Description of the Drawings

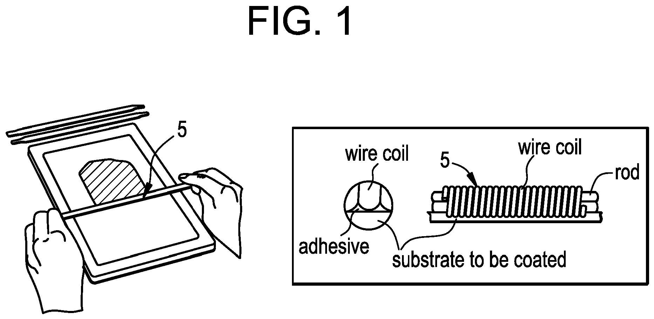

Figure 1 illustrates the application of a coating to a film.

### Detailed Description

Unless specified otherwise herein, percentages are weight percentages (wt%) and temperatures are in °C.

The term "composition," as used herein, refers to a mixture of materials which comprises the composition, as well as reaction products and decomposition products formed from the materials of the composition.

"Polymer" means a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities (for example, catalyst residues) may be incorporated into and/or within the polymer. A polymer may be a single polymer, a polymer blend or a polymer mixture, including mixtures of polymers that are formed *in situ* during polymerization.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The terms "olefin-based polymer" or "polyolefin", as used herein, refer to a polymer that comprises, in polymerized form, a majority amount of olefin monomer, for example ethylene or propylene (based on the weight of the polymer), and optionally may comprise one or more comonomers.

The term, "ethylene/α-olefin interpolymer," as used herein, refers to an interpolymer that comprises, in polymerized form, a majority amount (>50 mol %) of units derived from ethylene monomer, and the remaining units derived from one or more α-olefins. Typical α-olefins used in forming ethylene/α-olefin interpolymers are C₃-C₁₀ alkenes.

The term, "ethylene/α-olefin copolymer," as used herein, refers to a copolymer that comprises, in polymerized form, a majority amount (>50 mol%) of ethylene monomer, and an α-olefin, as the only two monomer types.

The term "a-olefin", as used herein, refers to an alkene having a double bond at the primary or alpha (α) position.

The term "in adhering contact" and like terms mean that one facial surface of one layer and one facial surface of another layer are in touching and binding contact to one another such that one layer cannot be removed from the other layer without damage to the interlayer surfaces (i.e., the in-contact facial surfaces) of both layers.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

"Polyethylene" or "ethylene-based polymer" shall mean polymers comprising a majority amount (>50 mol %) of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); Medium Density Polyethylene (MDPE); and High Density Polyethylene (HDPE). These polyethylene materials are generally known in the art; however, the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homo-polymerized or copolymerized in autoclave or tubular reactors at pressures above 14,500 psi (100 MPa) with the use of free-radical initiators, such as peroxides (see for example US 4,599392). LDPE resins typically have a density in the range of 0.916 to 0.935 g/cm³.

The term "LLDPE", includes both resin made using the traditional Ziegler-Natta catalyst systems and chromium-based catalyst systems as well as single-site catalysts, including, but not limited to, bis-metallocene catalysts (sometimes referred to as "m-LLDPE") and constrained geometry catalysts, and includes linear, substantially linear or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art.

The term "MDPE" refers to polyethylenes having densities from 0.926 to 0.935 g/cm³. "MDPE" is typically made using chromium or Ziegler-Natta catalysts or using single-site catalysts including, but not limited to, bis-metallocene catalysts and constrained geometry catalysts, and typically have a molecular weight distribution ("MWD") greater than 2.5.

The term "HDPE" refers to polyethylenes having densities greater than about 0.935 g/cm³ and up to about 0.970 g/cm³, which are generally prepared with Ziegler-Natta catalysts, chrome catalysts or single-site catalysts including, but not limited to, bis-metallocene catalysts and constrained geometry catalysts.

The term "ULDPE" refers to polyethylenes having densities of 0.880 to 0.912 g/cm³, which are generally prepared with Ziegler-Natta catalysts, chrome catalysts, or single-site catalysts including, but not limited to, bis-metallocene catalysts and constrained geometry catalysts.

"Blend", "polymer blend" and like terms mean a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art. Blends are not laminates, but one or more layers of a laminate may contain a blend. Such blends can be prepared as dry blends, formed *in situ* (e.g., in a reactor), melt blends, or using other techniques known to those of skill in the art.

"Polypropylene" shall mean polymers comprising greater than 50% by weight of units which have been derived from propylene monomer. This includes polypropylene homopolymers or copolymers (meaning units derived from two or more comonomers). Common forms of polypropylene known in the art include homopolymer polypropylene (hPP), random copolymer polypropylene (rcPP), impact copolymer polypropylene (hPP + at least one elastomeric impact modifier) (ICPP) or high impact polypropylene (HIPP), high melt strength polypropylene (HMS-PP), isotactic polypropylene (iPP), syndiotactic polypropylene (sPP), and combinations thereof.

Unless otherwise indicated herein, the following analytical methods are used in the describing aspects of the present invention:
Melt index: Melt indices I₂ (or I2) and I₁₀ (or I10) are measured in accordance to ASTM D-1238 at 190°C and at 2.16 kg and 10 kg load, respectively. Their values are reported in g/10 min. "Melt flow rate" is used for polypropylene based resins, and other resins, and determined according to ASTM D1238 (230° C at 2.16 kg).

Density: Samples for density measurement are prepared according to ASTM D4703. Measurements are made, according to ASTM D792, Method B, within one hour of sample pressing.

Peak melting point is determined by Differential Scanning Calorimeter (DSC) where the film is conditioned at 230° C for 3 minutes prior to cooling at a rate of 10 ° C per minute to a temperature of -40 ° C. After the film is kept at -40° C for 3 minutes, the film is heated to 200 ° C at a rate of 10 ° C per minute.

The term molecular weight distribution or "MWD" is defined as the ratio of weight average molecular weight to number average molecular weight (M_{w}/Mₙ). M_{w} and Mₙ are determined according to methods known in the art using conventional gel permeation chromatography (conventional GPC).

Gloss is measured at 45° according to ASTM D2457 unless indicated otherwise.

Thermal resistance was measured according to ASTM F1921-98 as described further below.

Coefficient of Friction is determined according to ASTM 1894.

Additional properties and test methods are described further herein.

In a first aspect, the present invention provides a coated film that comprises a film and a coating on an outer surface of the film comprising polyurethane and a plurality of [(trimethylsilyl)oxy]-modified silica particles. In some embodiments, the plurality of [(trimethylsilyl)oxy]-modified silica particles have an average particle size (D<50) of 1 to 20 microns. The coating comprises 1.2 to 6.5 weight percent of the [(trimethylsilyl)oxy]-modified silica particles based on the total weight of the dry coating.

In some embodiments, the coated outer surface of the film has a gloss of 11 units or less when measured at 45° in accordance with ASTM D2457.

In some embodiments, the film is a monolayer film. The film is a multilayer film in some embodiments. In some embodiments, the film comprises polyethylene, polypropylene, or a combination thereof. The film, in some embodiments, comprises 95 weight percent or more polyethylene based on the total weight of the uncoated film. In some embodiments, the film is a blown film. In some embodiments where the film is a multilayer film, the film comprises a barrier layer. Additional details regarding other film structures that can be used in various embodiments of the present invention are provided herein.

The coated film is thermally resistant under the sealing conditions of ASTM F1921-98 over a temperature range of 80° C to 200° C in some embodiments. In some embodiments, the coated film has a coefficient of friction of 0.15 to 1.0 on the coated surface.

In some embodiments, the polyurethane is formed from: (a) a hydroxyl terminated polyol or urethane; and (b) an isocyanate-functional prepolymer. The isocyanate-functional prepolymer comprises an aromatic isocyanate in some embodiments. In some embodiments, the hydroxyl terminated urethane comprises at least one of a hydroxyl terminated polyether-based urethane, a hydroxyl terminated polyester-based urethane, and a hydroxyl terminated polyester-polyether-based urethane. The amount of coating on the outer surface of the film is 1 to 7 g/m² in some embodiments. Additional details regarding the polyurethane that can be used in the coating in various embodiments of the present invention are provided herein.

In a second aspect, the present invention provides articles (e.g., flexible packages, pouches, stand-up pouches, bags, etc.) comprising any of the inventive coated films disclosed herein.

In some such embodiments, the coated film has a thickness of 20 to 200 microns. Examples of such articles can include flexible packages, pouches, stand-up pouches, bags, and pre-made packages or pouches. In some embodiments, coated films of the present invention can be used in form, fill and seal processes to make packages, pouches, or other articles.

In a third aspect, the present invention provides laminates comprising any of the inventive coated films disclosed herein. In some embodiments, the laminate comprises an inventive coated film as disclosed herein laminated to a second film, wherein the second film comprises polyethylene terephthalate, biaxially oriented polypropylene, or polyethylene.

### Films

A variety of films can be coated to provide coated films according to various embodiments of the present invention. For example, the coated films can be monolayer films or multilayer films. The films can be formed from a variety of polymers including, for example, polyethylene, polypropylene, polyamides, and others typically used in films.

Embodiments of the present invention are particularly advantageous in proving coated films wherein the film is formed primarily from polyolefins such as polypropylene and/or polyethylene. For example, a coated film wherein the film comprises primarily polyethylene or polypropylene has an improved recyclability profile in addition to other advantages that the usage of such polymers may provide. In particular, the incorporation of inventive coated polyethylene films into articles (e.g., packages such as stand-up pouches) having a matte finish would be advantageous. In some embodiments, the film comprises 95 weight percent or more polyethylene based on the total weight of the uncoated film. In other embodiments, the film comprises 96 weight percent or more, 97 weight percent or more, 98 weight percent or more, or 99 weight percent or more polyethylene based on the total weight of the uncoated film.

A variety of polyethylene films that can be coated to provide coated films according to embodiments of the present invention will now be described.

As noted above, in some embodiments, the film used in the coated film is a multilayer film. In some such embodiments, a first layer comprises from 70 to 100 percent by weight of a linear low density polyethylene. The first layer is a surface layer in some embodiments. For example the amount of the linear low density polyethylene can be from a lower limit of 70, 80, or 90 wt% to an upper limit of 80, 90, or 100 wt%. For example, the amount of the first linear low density polyethylene can be from 80 to 100 wt%, or in the alternative, from 70 to 90 wt%, or in the alternative, from 75 to 95 wt%, or in the alternative from 80 to 100 wt%.

The linear low density polyethylene has a density less than or equal to 0.930 g/cc (cm³). For example, the density of the linear low density polyethylene can be from an upper limit of 0.928, 0.925, 0.920 or 0.915 g/cc In some aspects of the invention, the first linear low density polyethylene has a density greater than or equal to 0.870 g/cc.

The linear low density polyethylene has a peak melting point of 126° C or less in some embodiments, preferably between 70 and 121° C, more preferably between 80 and 121° C.

The melt index of the linear low density polyethylene in the first layer can depend on a number of factors including whether the film is a blown film or a cast film. In embodiments where the film is a blown film, the linear low density polyethylene has an I₂ less than or equal to 2.0 g/10 minutes. For example, the first linear low density polyethylene can have a melt index from an upper limit of 2.0, 1.7, 1.4, 1.1, or 0.9 g/10 minutes. In a particular aspect of the invention, the linear low density polyethylene has an I₂ with a lower limit of 0.1 g/10 minutes. For example, the first linear low density polyethylene can have an I₂ greater than or equal to 0.1, 0.2, 0.3, or 0.4 g/10 minutes.

In other embodiments, the film can be a cast film. In such embodiments, the linear low density polyethylene has an I₂ greater than or equal to 2.0 g/10 minutes. For example, the first linear low density polyethylene can have a melt index from a lower limit of 2.0, 3.0, 4.0, 5.0, 6.0, or 10 g/10 minutes. In some embodiments, the first linear low density polyethylene for a cast film application can have an upper melt index limit of 15 g/10 minutes. In some embodiments, depending on the other components in the first layer or other layers, the first linear low density polyethylene in the first layer for a cast film application can have an upper limit of I₂ of less than 2.0 g/10 minutes. In some embodiments, the linear low density polyethylene in the first layer for a cast film application can have a melt index (I₂) of 0.1-2.0 g/10 minutes, or 0.5-2.0 g/10 minutes.

Examples of linear low density polyethylenes that can be used in the first layer include those commercially available from The Dow Chemical Company under the names AFFINITY^{™} and DOWLEX^{™}, including, for example, AFFINITY^{™} PL 1146G, AFFINITY^{™} 1881G, DOWLEX^{™} 2045G, and DOWLEX^{™} 2645G.

Alternatively (or in addition to) such linear low density polyethylenes, enhanced polyethylenes or ultra low density polyethylenes having densities, melt indexes, and peak melting points within the ranges described above can also be used. Examples of enhanced polyethylenes that can be used in the first layer include those commercially available from The Dow Chemical Company under the names ELITE^{™} AT and ELITE^{™}, including, for example, ELITE^{™} AT 6401 and ELITE^{™} 5401G. Examples of ultra low density polyethylenes that can be used in the first layer include those commercially available from The Dow Chemical Company under the name ATTANE^{™} including, for example, ATTANE^{™} 4203.

In embodiments where the first layer comprises <100% of the first linear low density polyethylene, the first layer further comprises one or more additional polyethylene resins such as, for example, one or more low density polyethylenes having a melt index from 0.1 to 5 g/10 minutes, one or more additional linear low density polyethylenes having a density of 0.930 g/cc or more and a melt index from 0.1 to 5 g/10 minutes.

In embodiments wherein the film comprises a multilayer film, a second layer comprises from 60 to 100 percent by weight of a polyethylene. The second layer is another surface layer in some embodiments. For example the amount of the polyethylene can be from a lower limit of 60, 70, 80, or 90 wt% to an upper limit of 70, 80, 90, or 100 wt%. For example, the amount of the polyethylene can be from 70 to 100 wt%, or in the alternative, from 60 to 90 wt%, or in the alternative, from 65 to 95 wt%, or in the alternative from 70 to 100 wt%.

The polyethylene in the second layer has a density of 0.905 to 0.970 g/cc (cm³). For example, the density of the polyethylene can be from a lower limit of 0.905, 0.910, 0.920, 0.930, 0.940, or 0.950 g/cc to an upper limit of 0.930, 0.940, 0.950, 0.960, 0.970 g/cc. In some embodiments, the polyethylene has a density from 0.910 to 0.970g/cc, preferably between 0.920 to 0.960 g/cc, more preferably between 0.940 to 0.960 g/cc.

The polyethylene in the second layer has a peak melting point of 100° C to 135° C in some embodiments, preferably between 121 and 132° C, more preferably between 126 and 132° C.

The melt index of the polyethylene in the second layer can depend on a number of factors including whether the film is a blown film or a cast film. In embodiments where the film is a blown film, the polyethylene has an I₂ less than or equal to 2.0 g/10 minutes.

For example, the polyethylene can have a density from an upper limit of 2.0, 1.7, 1.4, 1.1, or 0.9 g/10 minutes. In a particular aspect of the invention, the polyethylene has an I₂ with a lower limit of 0.1 g/10 minutes. For example, the polyethylene can have an I₂ greater than or equal to 0.1, 0.2, 0.3, or 0.5 g/10 minutes.

In other embodiments, the film can be a cast film. In such embodiments, the polyethylene in the second layer has an I₂ greater than or equal to 2.0 g/10 minutes. For example, the first linear low density polyethylene can have a melt index from a lower limit of 2.0, 3.0, 4.0, 5.0, 6.0, or 10 g/10 minutes. In some embodiments, the polyethylene in the second layer for a cast film application can have an I₂ of up to 15 g/10 minutes. In some embodiments, depending on the other components in the second layer or other layers, the polyethylene in the second layer for a cast film application can have an upper limit of I₂ of less than 2.0 g/10 minutes. In some embodiments, the polyethylene in the second layer for a cast film application can have a melt index (I₂) of 0.1-2.0 g/10 minutes, or 0.5-2.0 g/10 minutes.

Examples of polyethylenes that can be used in the second layer include those commercially available from The Dow Chemical Company under the names DOWLEX^{™}, ELITE^{™}, and ATTANE^{™}, such as DOWLEX^{™} 2045G, DOWLEX^{™} NG2038B, ELITE^{™} 5111G, ELITE^{™} 5400G, ELITE^{™} 5960G, and ATTANE 4203.

In embodiments where the second layer comprises <100% of the polyethylene described above, the second layer further comprises one or more additional polyethylene resins such as, for example, one or more low density polyethylenes having a melt index from 0.1 to 5 g/10 minutes, one or more additional linear low density polyethylenes having a density of 0.930 g/cc or less and a melt index from 0.1 to 5 g/10 minutes.

In some other embodiments wherein the film comprises a multilayer film, a second layer can comprise from 60 to 100 percent by weight of a polypropylene. The second layer is another surface layer in some embodiments. For example the amount of the polypropylene can be from a lower limit of 60, 70, 80, or 90 wt% to an upper limit of 70, 80, 90, or 100 wt%. For example, the amount of the polypropylene can be from 70 to 100 wt%, or in the alternative, from 60 to 90 wt%, or in the alternative, from 65 to 95 wt%, or in the alternative from 70 to 100 wt%.

The polypropylene that can be used in the second layer can be homopolymer polypropylene (hPP), random copolymer polypropylene (rcPP), impact copolymer polypropylene (hPP + at least one elastomeric impact modifier) (ICPP) or high impact polypropylene (HIPP), high melt strength polypropylene (HMS-PP), isotactic polypropylene (iPP), syndiotactic polypropylene (sPP), and combinations thereof. Examples of homopolymer propylenes that can be used in some embodiments of the present invention include homopolymer propylenes commercially available from LyondellBasell Industries (e.g., Pro-fax PD702), from Braskem (e.g., D115A), and from Borealis (e.g., WF 420HMS). The polypropylene that can be used in the second layer can also be a propylene-alpha-olefin interpolymer. Such propylene/alpha-olefin interpolymers are commercially available from The Dow Chemical Company, under the name VERSIFY^{™}, or from ExxonMobil Chemical Company, under the trade name VISTAMAXX.

In embodiments where the second layer comprises <100% of the polypropylene described above, the second layer further comprises one or more polyethylene resins such as, for example, one or more low density polyethylenes having a melt index from 0.1 to 5 g/10 minutes, one or more additional linear low density polyethylenes having a density of 0.930 g/cc or less and a melt index from 0.1 to 5 g/10 minutes.

In embodiments wherein the film is a multilayer film having first and second layers as described above, the film can further comprise one or more inner layers between the first layer and the second layer. In such embodiments, at least one of the inner layers can comprise from 40 to 100 percent by weight of a high density polyethylene. For example the amount of the high density polyethylene can be from a lower limit of 40, 50, 60, 70, 80, or 90 wt% to an upper limit of 50, 60, 70, 80, 90, or 100 wt%. For example, the amount of the high density polyethylene can be from 50 to 100 wt%, or in the alternative, from 60 to 90 wt%, or in the alternative, from 65 to 95 wt%, or in the alternative from 70 to 100 wt%.

The high density polyethylene has a density of 0.930 g/cc (cm³) to 0.970 g/cc. For example, the density of the polyethylene can be from a lower limit of 0.930, 0.940, 0.950, or 0.960 g/cc to an upper limit of 0.950, 0.960, or 0.970 g/cc. In some embodiments, the high density polyethylene has a density of 0.940 g/cc or more.

The high density polyethylene has a peak melting point of 126° C to 135° C in some embodiments, preferably between 126 and 132° C, more preferably between 127 and 132° C.

The melt index of the high density polyethylene in the at least one inner layer can depend on a number of factors including whether the film is a blown film or a cast film. In embodiments where the film is a blown film, the high density polyethylene has an I₂ less than or equal to 2.0 g/10 minutes.

For example, the high density polyethylene can have a density from an upper limit of 2.0, 1.7, 1.4, 1.1, or 0.9 g/10 minutes. In a particular aspect of the invention, the high density polyethylene has an I₂ with a lower limit of 0.1 g/10 minutes. For example, the high density polyethylene can have an I₂ greater than or equal to 0.1, 0.2, 0.3, or 0.4 g/10 minutes. In other embodiments, the film can be a cast film. In such embodiments, the high density polyethylene has an I₂ greater than or equal to 2.0 g/10 minutes. For example, the high density polyethylene in the at least one inner layer can have a melt index from a lower limit of 2.0, 3.0, 4.0, 5.0, 6.0, or 10 g/10 minutes. In some embodiments, the high density polyethylene in the at least one inner layer for a cast film application can have an I₂ of up to 15 g/10 minutes. In some embodiments, depending on the other components in the inner layer(s) or other layers, the high density polyethylene in the at least one inner layer for a cast film application can have an upper limit of I₂ of less than 2.0 g/10 minutes. In some embodiments, the high density polyethylene in the at least one inner layer for a cast film application can have a melt index (I₂) of 0.1-2.0 g/10 minutes, or 0.5-2.0 g/10 minutes.

Examples of high density polyethylenes that can be used in the at least one inner layer include those commercially available from The Dow Chemical Company under the name DOWLEX^{™} name. Alternatively (or in addition to) such high density polyethylenes, enhanced polyethylenes having densities, melt indexes, and peak melting points within the ranges described above can also be used. Examples of enhanced polyethylenes that can be used in the at least one inner layer include those commercially available from The Dow Chemical Company under the ELITE^{™} name, such as ELITE^{™} 5940G, and ELITE^{™} 5960G. In some embodiments, a medium density polyethylene can be used in the inner layer instead of, or in addition to a high density polyethylene or enhanced polyethylene. An example of such a medium density polyethylene is DOWLEX^{™} 2038.68G from The Dow Chemical Company.

In embodiments where an inner layer comprises <100% of the polyethylene described above, the inner layer further comprises one or more additional polyethylene resins such as, for example, one or more low density polyethylenes having a melt index from 0.1 to 5 g/10 minutes, one or more additional linear low density polyethylenes having a density of 0.930 g/cc or less and a melt index from 0.1 to 5 g/10 minutes.

In addition to an inner layer comprising 40 to 100 percent by weight of a high density polyethylene, in some embodiments, the film can comprise one or more additional inner layers comprising other polyethylenes or combinations of polyethylenes, such as one or more low density polyethylenes, one or more linear low density polyethylenes, one or more high density polyethylenes, one or more enhanced polyethylenes, or combinations thereof. For example, in one embodiment, the film comprises at least one additional inner layer wherein the additional inner layer comprises 50 to 100 weight percent of a polyethylene having a density of 0.920 g/cc (cm³) or less. For example, the density of the polyethylene can be to an upper limit of 0.900, 0.905, 0.910, 0915, or 0.920 g/cc. Such inner layers can be provided, for example, to enhance the strength of the film.

The melt index of the polyethylene in the at least one additional inner layer can depend on a number of factors including whether the film is a blown film or a cast film. In embodiments where the film is a blown film, the polyethylene in the at least one additional layer has an I₂ less than or equal to 2.0 g/10 minutes. For example, the polyethylene can have a density from an upper limit of 2.0, 1.7, 1.4, 1.1, or 0.9 g/10 minutes. In a particular aspect of the invention, the polyethylene has an I₂ with a lower limit of 0.01 g/10 minutes. For example, the polyethylene can have an I₂ greater than or equal to 0.1, 0.2, 0.3, or 0.4 g/10 minutes.

In other embodiments, the film can be a cast film. In such embodiments, the polyethylene in the at least one additional inner layer has an I₂ greater than or equal to 2.0 g/10 minutes. For example, the polyethylene can have a melt index from a lower limit of 2.0, 3.0, 4.0, 5.0, 6.0, or 10 g/10 minutes. In some embodiments, the polyethylene in the at least one additional inner layer for a cast film application can have an I₂ of up to 15 g/10 minutes. In some embodiments, depending on the other components in the inner layer(s) or other layers, the polyethylene in the at least one additional inner layer for a cast film application can have an upper limit of I₂ of less than 2.0 g/10 minutes. In some embodiments, the polyethylene in the at least one additional inner layer for a cast film application can have a melt index (I₂) of 0.1-2.0 g/10 minutes, or 0.5-2.0 g/10 minutes.

Examples of polyethylenes having a density of 0.920 g/cc or less that can be used in the at least one additional inner layer include those commercially available from The Dow Chemical Company under the names DOWLEX^{™}, ELITE^{™}, and ATTANE^{™}, such as DOWLEX^{™} 2045G, ELITE^{™} 5401G, and ATTANE^{™} 4203G.

In any of the above layers (but preferably in the inner layers) of a multilayer film, other polyolefin resins can be included in addition to the polyethylene for a variety of reasons. For example, a layer in a multilayer film can comprise other polyolefin resins, such as polypropylene and/or cyclic olefin copolymers (e.g., cyclic olefin copolymers commercially available from TOPAS Advance polymers such as TOPAS 6013), to provide increased stiffness without significant harm to the compatibility among materials and potential recyclability. In such embodiments, the additional polyolefin resins can be provided in amounts less than 50 weight percent.

In some embodiments, a multilayer film that can be used in coated films of the present invention can comprise 3 or more layers. A multilayer film that can be used in coated films of the present invention can comprise up to 11 layers in some embodiments. The number of layers in the film can depend on a number of factors including, for example, the desired thickness of the multilayer film, the desired properties of the multilayer film, the intended use of the multilayer film, and other factors.

In some embodiments, one or more layers in multilayer film can comprise one or more additives. Additives can include, but are not limited to, antistatic agents, color enhancers, dyes, lubricants, fillers (for example, TiO₂ or CaCO₃), opacifiers, nucleators, processing aids, pigments, primary anti-oxidants, secondary anti-oxidants, UV stabilizers, anti-blocks, slip agents, tackifiers, fire retardants, anti-microbial agents, odor reducer agents, anti-fungal agents, oxygen scavengers, moisture scavengers, and combinations thereof, depending on the requirements of a particular application.

In some embodiments, depending on the desired use or requirements of the film, the film can comprise other layers such as barrier layers. For example, for some uses, it may be desirable for the film to provide a barrier to moisture, light, aroma/odor, and/or oxygen transmission. Such barrier layers can comprise, for example, polyamide, ethylene vinyl alcohol, and other polymers used in barrier layers as known to those of skill in the art. In such embodiments, one or more tie layers may be included in the film to adhere the barrier layer(s) to the polyethylene-based layer(s) as known to those of skill in the art.

As noted above, a variety of multilayer films can be coated with polyurethane coatings to provide coated films according to embodiments of the present invention. Some non-limiting examples of such multilayer films are provided in PCT Publication No. WO2016/196168.

In some embodiments, a film to be coated with the polyurethane coating comprises a monolayer film. In such embodiments, the monolayer film can comprise from 70 to 100 percent by weight polyethylene having a density less than 0.930 g/cm³ and a melt index (I₂) of less than 2.0 g/10 minutes, and a peak melting point of less than 126° C. For example the amount of the polyethylene can be from a lower limit of 70, 80, or 90 wt% to an upper limit of 80, 90, or 100 wt%. For example, the amount of the polyethylene can be from 80 to 100 wt%, or in the alternative, from 70 to 90 wt%, or in the alternative, from 75 to 95 wt%, or in the alternative from 80 to 100 wt%.

The polyethylene used in the monolayer has a density less than or equal to 0.930 g/cc (cm³). For example, the density of the polyethylene can be from an upper limit of 0.928, 0.925, 0.920 or 0.915 g/cc. In some aspects of the invention, the polyethylene has a density greater than or equal to 0.870 g/cc.

The polyethylene used in the monolayer has a peak melting point of 126° C or less in some embodiments, preferably between 70 and 121° C, more preferably between 80 and 121° C.

The melt index of the polyethylene used in the monolayer (I₂) is less than or equal to 2.0 g/10 minutes in some embodiments. For example, the polyethylene can have a density from an upper limit of 2.0, 1.7, 1.4, 1.1, or 0.9 g/10 minutes. In a particular aspect of the invention, the polyethylene has an I₂ with a lower limit of 0.1 g/10 minutes. For example, the polyethylene can have an I₂ greater than or equal to 0.1, 0.2, 0.3, or 0.4 g/10 minutes.

Examples of polyethylenes having a density of 0.930 g/cc or less, a melt index (I₂) of 2.0 g/10 minutes or less, and a peak melting point of 126° C or less that can be used in a monolayer film according to some embodiments include those commercially available from The Dow Chemical Company under the names AFFINITY^{™}, ELITE^{™} AT, and ATTANE^{™}, such as AFFINITY^{™} PL 1146G, AFFINITY^{™} 1888, ELITE^{™} AT 6401, ELITE^{™} 5401G, and ATTANE^{™} 4203.

In the case of a monolayer film, other polyolefin resins can be included in the monolayer in addition to the polyethylene for a variety of reasons. For example, the monolayer can comprise polyolefin resins, such as polypropylene and/or cyclic olefin copolymers (e.g., cyclic olefin copolymers commercially available from TOPAS Advance polymers such as TOPAS 6013), to provide increased stiffness. In such embodiments, the additional polyolefin resins can be provided in amounts less than 50 weight percent.

In embodiments where the monolayer comprises <100% of the polyethylene described above, the monolayer further comprises one or more additional polyethylene resins such as, for example, one or more low density polyethylenes having a melt index from 0.1 to 5 g/10 minutes, one or more additional linear low density polyethylenes having a density of 0.930 g/cc or less and a melt index from 0.1 to 5 g/10 minutes.

It is preferred that the films used in embodiments of the present invention be formed in a blown film or cast film process as is generally known in the art, although other methods such as lamination can be used.

### Polyurethane Coating

The present invention provides a polyurethane-based coating on an outer surface of the film.

The term "polyurethane-based coating" is used to indicate that upon curing, the coating comprises primarily polyurethane but that the coating may also include, in some embodiments, unreacted reactants (e.g., polyols, isocyanates, etc.) as well as other additives.

In some embodiments, the polyurethane is formed from: (a) a hydroxyl terminated polyol or urethane; and (b) an isocyanate-functional prepolymer. The isocyanate-functional prepolymer, in some embodiments, comprises an aromatic isocyanate. Examples of aromatic isocyanates that can be used in some embodiments of the present invention include any or all isomers of toluene diisocyanate (TDI) and/or any or all isomers of methylene diphenyl diisocyanate (MDI). In some embodiments, the isocyanate-functional prepolymer comprises an aliphatic isocyanate. Examples of aliphatic isocyanates that can be used in some embodiments of the present invention include any and all isomers of isophorone diisocyanate (IPDI), any and all isomers of hexamethylene diisocyanate (HDI), any and all isomers of xylylene diisocyanate (XDI), any and all isomers of hydrogenated xylylene diisocyanate (H6XDI), and any and all isomers of meta-tetramethylxylylene diisocyanate (TMXDI). The hydroxyl terminated urethane comprises at least one of a hydroxyl terminated polyether-based urethane, a hydroxyl terminated polyester-based urethane, and a hydroxyl terminated polyester-polyether-based urethane, in some embodiments.

The polyurethane may be formed by mixing together two separate components at a prescribed mixing ratio and then curing upon reaction between the two components. In some embodiments, the two reactant components can be prepared so as to provide a mixing ratio of 1:1 (ratio of hydroxyl terminated polyol or urethane to isocyanate-functional prepolymer) to facilitate measuring and mixing. In some embodiments, such mixing ratio can be in the range from 1:0.2 to 1:2. At such mixing ratios, in some embodiments, the isocyanate index is in the range from -1: 1 to -3:3. In some embodiments, the polyurethane may be a one-component isocyanate terminated prepolymer that reacts with ambient moisture or humidity to complete its cure.

The polyurethane components may be comprised of polyether polyols, polyester polyols, or a combination of both. Such polyols can be linear or branched in some embodiments. Polyesters with aromatic components can be used to impart alternative performance properties such as chemical or heat resistance for a targeted application in some embodiments. In some embodiments, the coating is formed from polyols having molecular weights between 100 and 4700 Daltons and using multifunctional reagents that impart branching such as triisopropanolamine and trimethylolpropane. Such selected materials, when reacted together and combined with certain non-reactive additives, can advantageously provide desirable heat resistance, anti-blocking character, targeted coefficient of friction, and targeted gloss levels to coated films in accordance with some embodiments of the present invention.

In addition to polyurethane, the coating further comprises [(trimethylsilyl)oxy]-modified silica particles. The [(trimethylsilyl)oxy]-modified silica particles as described herein advantageously provide the matte finish of coated films according to some embodiments of the present invention.

The particle size of the [(trimethylsilyl)oxy]-modified silica particles can be especially important in some embodiments. The [(trimethylsilyl)oxy]-modified silica particles have an average particle size (D<50) of 1 to 20 microns in some embodiments. In some embodiments, the [(trimethylsilyl)oxy]-modified silica particles have an average particle size (D<50) of 5 to 15 microns. In some embodiments, the [(trimethylsilyl)oxy]-modified silica particles have an average particle size (D<50) of 13 to 20 microns. As used herein, the "average particle size (D<50)" represents the distribution of particle sizes on a volume weighted basis determined using laser light scattering as a basis for the determination. D<50 represent the particle diameter, in microns, below which 50% of the cumulative distribution is found. The MALVERN MASTERIZER X particle size analyzer instrument (Malvern Instruments, Malvern, Worcestershire, UK) may be used for the measurement with water as the dispersant. The following parameters are used: 45mm Lens; MSX1 Sample Preparation Unit; MSX23 Flow through cell; with 2.4mm beam Length; Presentation of 2LHD, with Particle Density=1.000; Polydisperse Analysis model. The sample is added dropwise directly to the dispersant in the analyzer that is stirring at mid-range(1600-1700rpm). The amount is added within 30 seconds so that obscuration stabilizes to between 15 and 30%. The total time from start of addition to start of analysis is 60 to 90 seconds. Sweeps for background are conducted and analysis is set at 5000. The average particle size (D<50) is then reported.

The [(trimethylsilyl)oxy]-modified silica particles have a bulk density of 30 to 45 kg/m³ in some embodiments. As used herein the term "bulk density" means the weight of solid in grams required to fill at least 30 cm³ of a 50 cm³ volumetric cylinder without using any packing force nor allowing time to settle (but making sure the cylinder is filled uniformly by tapping the cylinder on the lab bench) and dividing the weight by the occupied volume and reporting the value in the units of kg/m³.

The amount of [(trimethylsilyl)oxy]-modified silica particles to be used in the coating can also be important in providing a matte finish of a coated film according to some embodiments of the present invention. In addition to including an adequate amount of [(trimethylsilyl)oxy]-modified silica to provide the desired matte finish, the amount of [(trimethylsilyl)oxy]-modified silica can be limited by its solubility in ethyl acetate which is used as a solvent for forming the coatings according to some embodiments of the present invention. According to the invention, the coating comprises 1.2 to 6.5 weight percent of the [(trimethylsilyl)oxy]-modified silica particles based on the total weight of the coating. The coating comprises 5.0 to 6.5 weight percent of the [(trimethylsilyl)oxy]-modified silica particles based on the total weight of the coating, in some embodiments.

One example of [(trimethylsilyl)oxy]-modified silica particles that can be used in embodiments of the present invention are DOWSIL^{™} VM-2270 Aerogel Fine Particles commercially available from The Dow Chemical Company.

As set forth above, the coating can be formed from an isocyanate-functional prepolymer and a hydroxyl terminated polyol or urethane. The [(trimethylsilyl)oxy]-modified silica particles can be added directly to the hydroxyl terminated polyol or urethane. Alternatively, the [(trimethylsilyl)oxy]-modified silica particles can be diluted in ethyl acetate and then added to one of the reactant compositions. The following tables provide ranges of components that can be used in compositions that are used to prepare the polyurethane coating according to some embodiments of the present invention:

**Table 1- Reactant Composition (Hydroxyl Terminated Polyurethane)**

| **Ingredient** | **Amount (wt. %)** |
|---|---|
| ethyl acetate | 61-71% |
| Triisopropylanolamine (TIPA) | 6.5-7.5% |
| monomeric toluene diisocyanate (TDI) | 5.5-6.5% |
| polyether diol | 4.0-6.0% |
| polyether polyol | 4.0-10% |
| antifoam | <0.002% |
| [(trimethylsilyl)oxy]-modified silica particles | up to 3.5% |

**Table 2 - Reactant Composition (Isocyanate-Functional Prepolymer)**

| **Ingredient** | **Amount (wt. %)** |
|---|---|
| ethyl acetate | 15-25% |
| Trimethyl olpropane | 10-12% |
| monomeric toluene diisocyanate (TDI) | 35-50% |
| Additive | up to 1.5% |
| Lubricant (e.g., refined corn oil) | 1.0-2.0% |
| cyclohexane | 18-19% |
| benzoyl chloride | up to 0.1% |

According to some embodiments, the reactant compositions are mixed at a ratio of11 100 parts by weight of the hydroxyl terminated urethane composition to 35.27 parts by weight of the isocyanate-functional prepolymer composition. Additional information regarding the preparation of such compositions and their mixing to form the polyurethane coating are provided in the Examples section below.

### Coated Film

The coating (including the [(trimethylsilyl)oxy]-modified silica particles) can be applied to the outer surface of the film using a variety of techniques by which coatings are typically applied to films including, but not limited to, for example, gravure coating and flexographic coating. Other thin coating techniques may also be used. Persons of skill in the art with equipment to apply solvent-based and/or water-based coatings and adhesives can readily adapt their process to apply a polyurethane coating to a film to obtain the coated films of the present invention. To achieve adequate dynamic viscosity, the target solids at application will depend on the particular coating, but in some embodiments, can be in a range of 15% to 80%.

The amount of coating applied to the film, in some embodiments, can be at least 1 gram per square meter. As used herein, the amount of coating is determined by measuring the difference of the weight of the film before coating and after the coating is applied and dried. In some embodiments, the amount of coating applied to the film is up to 7 grams per square meter. The amount of coating applied to the film, in some embodiments, is 1 to 7 grams per square meter. For example, the amount of coating may be from a lower limit of 1, 2, 3, 4, 5, or 6 grams per square meter to an upper limit of 2, 3, 4, 5, 6, or 7 grams per square meter. For example, the amount of coating can be from 1 to 4 grams per square meter in some embodiments.

Various embodiments of coated films of the present invention can have one or more desirable properties including, for example, a matte surface finish, a broad thermal resistance range, stable coefficient of friction on the coated surface, and/or other properties.

In some embodiments, coated films of the present invention exhibit a matte surface finish. Put another way, coated films of the present invention exhibit a low gloss, particularly as compared to uncoated polyethylene films. The surface finish (whether matte or glossy) of a coated film of the present invention can be evaluated by measuring the gloss at 45° in accordance with ASTM D2457. In some embodiments, coated films of the present invention exhibit a gloss of 13 units or less at 45° when measured according to ASTM D2457. For example, the gloss can be from a lower limit of 1, 5, 6, 7, 8, 9, or 10 units to an upper limit of 10, 11, 12, or 13 units. For example, in some embodiments, coated films exhibit a gloss of 11 units or less at 45° when measured according to ASTM D2457.

In some embodiments, coated films of the present invention have a broad thermal resistance range. Coated films, according to some embodiments of the present invention, are thermally resistant over a range of temperatures from 80° C to 200° C. In some embodiments, coated films are thermally resistant over a range of temperatures from 80° C to 180° C. As used herein, the lower temperature of the range of thermal resistance is the temperature at which the coated film exhibits a heat seal strength of at least 0.18 kgf/cm (1 lbf/in) when measured according to ASTM 1921-98. As used herein, the upper temperature of the range of thermal resistance is the temperature at which the coated film exhibits burn through such that the heat seal strength cannot be measured according to ASTM 1921-98 due to deformation in the coated film.

In some embodiments, coated films of the present invention can exhibit a stable coefficient of friction on the coated surface. For example, in some embodiments, the coated surface exhibits a kinetic coefficient of friction of 0.15 to 1.0 when measured film-to-metal according to ASTM 1894. The coated surface exhibits a kinetic coefficient of friction of 0.1 to 0.4 when measured film-to-metal according to ASTM 1894 in some embodiments.

### Laminates and Articles

Some embodiments of the inventive coated films may be used to form laminates according to some embodiments of the present invention. For example, a coated film of the present invention can be laminated to a polyethylene terephthalate film, a biaxially oriented polypropylene film, or a polyethylene film using an adhesive according to techniques known to those of skill in the art based on the teachings herein. Such laminates can be used in articles of the present inventions as described further below.

Embodiments of the present invention also relate to articles formed from any of the coated films or laminates disclosed herein. In some embodiments, the article is a flexible package. In some embodiments, the flexible package comprises a first coated film according to the present invention and a second coated film according to the present invention. In some embodiments, the flexible package comprises a first coated film according to the present invention, a second coated film according to the present invention, and a third or more coated films according to the present invention. In some embodiments, the first coated film according to the present invention is heat sealed using the sealable side to another heat sealable surface, whether a film or a sheet or a formed container of any suitable construction that may or may not have a coating of the present invention on the non-heat sealable side of the film or sheet or formed container. Alternatively, the flexible package can be formed from a single coated film of the present invention that is folded.

In some embodiments, the flexible package is in the form of one or more of the following: a bag, a pouch, a sachet, and a stand up pouch that is formed using techniques known to those of skill in the art based on the disclosure herein.

The thickness of the coated film used to form the flexible package can be selected depending on a number of factors including, for example, the size of the flexible package, the volume of the flexible package, the contents of the flexible package, the desired properties of the flexible package, and other factors. In some such embodiments, the coated film has a thickness used in a flexible package of the present invention has a thickness of 20 to 200 microns. For example, the thickness of the coated film may be from a lower limit of 20, 30, 40, 50, 60, 70, 80, 90, 100, 110, 120, 130, 140, 150, 160, 170, 180, or 190 microns to an upper limit of 30, 40, 50, 60, 70, 80, 90, 100, 110, 120, 130, 140, 150, 160, 170, 180, 190, or 200 microns.

Non-limiting examples of contents suitable for containment by flexible packages of the present invention include comestibles (beverages, soups, cheeses, cereals), liquids, shampoos, oils, waxes, emollients, lotions, moisturizers, medicaments, pastes, surfactants, gels, adhesives, suspensions, solutions, enzymes, soaps, cosmetics, liniments, flowable particulates, and combinations thereof.

Some embodiments of the invention will now be described in detail in the following Examples.

### Examples

### Example 1

A number of polyurethane coatings are prepared for evaluation. The following additives are used in the coating to evaluate their impacts on the surface finish of a polyethylene film:

**Table 3**

| **Short Name** | **Chemical Name** | **Average Particle Size** | **Source** |
|---|---|---|---|
| Additive 1 | [(trimethylsilyl)oxy]-modified silica | 1-15 microns | DOWSIL^{™} VM-2270 Aerogel Fine Particles (The Dow Chemical Company) |
| Additive 2 | Dimethicone/vinyl dimethicone crosspolymer (and) silica | 1-10 microns | DOWSIL^{™} 9701 Cosmetic Powder (The Dow Chemical Company) |
| Additive 3 | Silicone elastomer particles with epoxy functionality | 1-3 microns | DOWSIL^{™} 23 N Additive (The Dow Chemical Company) |
| Additive 4 | Soda-lime borosilicate glass hollow spheres | 20 microns | 3M Glass Bubbles iMl6K (3M) |

Additive 4 is not found to be soluble with reactant compositions that would be used to form the polyurethane coating (phase separation is observed), and is thus eliminated from further evaluation.

### Preparation of Reactant Compositions for Polyurethane Coating

The following Examples evaluate coated films having polyurethane coatings that incorporate Additives 1-3 in varying amounts to evaluate the properties of the coated films.

The polyurethane coating used in these Examples is prepared from two reactant compositions as follows. Reactant Composition A comprises a hydroxyl terminated urethane and is prepared from the following ingredients:

**Table 4 - Reactant Composition A**

| **Ingredient** | **Description** | **Amount (wt. %)** |
|---|---|---|
| ethyl acetate | Solvent from UNIVAR, Inc. | 70.8681 |
| Triisopropylanolamine (TIPA) | TIPA (99%) from The Dow Chemical Company | 7.1570 |
| monomeric toluene diisocyanate (TDI) | Mondur TD-80 Grade B from Bayer Material Science | 6.2892 |
| polyether diol | polyether diol (nominal molecular weight of 425) from The Dow Chemical Company | 4.8895 |
| polyether polyol | VORANOL 220-110N from The Dow Chemical Company | 7.5582 |
| antifoam | SAG-47 from Momentive Performance Materials | 0.0016 |
| Additive | Additive 1, Additive 2, or Additive 3 from Table 3 | 3.2363 |

To prepare Reactant Composition A, the TIPA is melted. The polyether diol (nominal molecular weight of 425) is vacuum loaded into a reactor. The melted TIPA is vacuum loaded into the reactor, followed by the polyether polyol (VORANOL 220-110N). The vacuum lines are rinsed with ethyl acetate and the contents of the reactor are stirred at 75 RPM. Ethyl acetate is vacuum loaded into the reactor. The contents of the reactor are cooled via a cooling jacket. After cooling, the TDI is loaded to the reactor, and the vacuum lines are rinsed with ethyl acetate. Because of the exothermic nature of the reaction, the contents of the reactor are cooled to a temperature of 75° C. The temperature in the reactor is held at 75° C under agitation for 4 hours. The contents of the reactor are then cooled to 60° C, and the viscosity is measured. If the viscosity is ≺ 2500 mPa.s (2500 cP), the contents of the reactor are cooled to 40° C, and 0.393 weight percent TDI (based on the original TDI charge) is added, and the mix tank contents are heated and held at 75° C for one hour. The Additive is then loaded under agitation. After 30 minutes, if the viscosity is ≻ 2500 mPa.s (2500 cP), a mixture of the antifoam and the remaining ethyl acetate are vacuum loaded to the reactor. The contents are then stirred for 30 minutes. The reactor is then cooled to 50° C, and the Reactant Composition A is packaged for use.

Reactant Composition B comprises an isocyanate-functional prepolymer and is prepared from the following ingredients:

**Table 5 - Reactant Composition B**

| **Ingredient** | **Description** | **Amount (wt. %)** |
|---|---|---|
| ethyl acetate | Solvent from UNIVAR, Inc. | 23.329 |
| Trimethylolpropane | Trimethylolpropane from Lanxess Corp. | 11.480 |
| monomeric toluene diisocyanate (TDI) | Mondur TD-80 Grade B from Bayer Material Science | 43.612 |
| Additive | Synaceti 125 from Werner G. Smith, Inc. | 1.191 |
| Lubricant | Refined corn oil from Cargill Inc. | 1.91 |
| cyclohexane | Cyclohexane from UNIVAR, Inc. | 18.423 |
| benzoyl chloride | benzoyl chloride from Aldrich Chemical Co. | 0.055 |

To prepare Reactant Composition B, the Additive and the Lubricant are premixed and held at 50° C. The trimethylolpropane is loaded to the reactor followed by ethyl acetate. The TDI is vacuum loaded to the reactor followed by the remainder of the ethyl acetate as a rinse. The batch is held at 70° C for 3 hours. The batch is then cooled to 55° C. The viscosity of the batch is measured. If the viscosity is ≺ 380 mPa.s (380 cP) the viscosity of the batch is adjusted to >380 cP by adding trimethylolpropane. If the viscosity is ≻ 380 mPa.s (380 cP) or after the additional trimethylolpropane is added, the reactor is then cooled to 55° C. The premixed Additive/Lubricant are vacuum loaded to the reactor. The cyclohexane is then added to the reactor, and the contents are held at 45° C and stirred 45 minutes until the contents are clear (e.g., Additive must be dissolved). The benzoyl chloride is then vacuum loaded to the reactor, and the contents are stirred for 15 minutes. Reactant Composition B is then packaged for use.

Tables 4 and 5 provide Reactant Compositions designed to provide 6.5 weight percent of the Additive in the dry coated layer of the coated film, and is referred to as Inventive Coating Composition 1. Other Inventive Coating Compositions and Comparative Coating Compositions are prepared using the above procedure with different ingredient amounts and different mix ratios of Reactant Composition A and B. These Coating Compositions are as follows:

### Inventive Coating Composition 2 (5.2 weight percent of Additive 1 in dry coated layer)

| **Reactant Composition A** | |
|---|---|
| **Ingredient** | **Amount (wt. %)** |
| Ethyl Acetate | 71.0103 |
| TIPA | 7.2986 |
| TDI | 6.4136 |
| Polyether diol | 4.9863 |
| Polyether Polyol | 7.7078 |
| Antifoam | 0.0017 |
| Additive 1 | 2.5818 |

| **Reactant Composition B** | |
|---|---|
| **Ingredient** | **Amount (wt. %)** |
| Ethyl Acetate | 23.329 |
| TMP | 11.48 |
| TDI | 43.612 |
| Other Additives | 1.191 |
| Lubricant | 1.91 |
| Cyclohexane | 18423 |
| Benzoyl Chloride | 0.055 |

| **Mix Ratio** | |
|---|---|
| **A** | **100 parts** |
| **B** | **35.97 parts** |

### Inventive Coating Composition 3 (3.8 weight percent of Additive 1 in dry coated layer)

| **Reactant Composition A** | |
|---|---|
| **Ingredient** | **Amount (wt. %)** |
| Ethyl Acetate | 71.0572 |
| TIPA | 7.4733 |
| TDI | 6.5672 |
| Polyether diol | 5.1056 |
| Polyether Polyol | 7.8923 |
| Antifoam | 0.0017 |
| Additive 1 | 1.9026 |

| **Reactant Composition B** | |
|---|---|
| **Ingredient** | **Amount (wt. %)** |
| Ethyl Acetate | 23.329 |
| TMP | 11.48 |
| TDI | 43.612 |
| Other Additives | 1.191 |
| Lubricant | 1.91 |
| Cyclohexane | 18.423 |
| Benzoyl Chloride | 0.055 |

| **Mix Ratio** | |
|---|---|
| **A** | **100 parts** |
| **B** | **36.83 parts** |

### Inventive Coating Composition 4 (2.4 weight percent of Additive 1 in dry coated layer)

| **Reactant Composition A** | |
|---|---|
| **Ingredient** | **Amount (wt. %)** |
| Ethyl Acetate | 71.2729 |
| TIPA | 7.5993 |
| TDI | 6.6779 |
| Polyether diol | 5.1917 |
| Polyether Polyol | 8.0253 |
| Antifoam | 0.0017 |
| Additive 1 | 1.2312 |

| **Reactant Composition B** | |
|---|---|
| **Ingredient** | **Amount (wt. %)** |
| Ethyl Acetate | 23.329 |
| TMP | 11.48 |
| TDI | 43.612 |
| Other Additives | 1.191 |
| Lubricant | 1.91 |
| Cyclohexane | 18423 |
| Benzoyl Chloride | 0.055 |

| **Mix Ratio** | |
|---|---|
| **A** | **100 parts** |
| **B** | **37.45 parts** |

### Inventive Coating Composition 5 (1.2 weight percent of Additive 1 in dry coated layer)

| **Reactant Composition A** | |
|---|---|
| **Ingredient** | **Amount (wt. %)** |
| Ethyl Acetate | 71.3082 |
| TIPA | 7.7591 |
| TDI | 6.8183 |
| Polyether diol | 5.3009 |
| Polyether Polyol | 8.1941 |
| Antifoam | 0.0018 |
| Additive 1 | 0.6176 |

| **Reactant Composition B** | |
|---|---|
| **Ingredient** | **Amount (wt. %)** |
| Ethyl Acetate | 23.329 |
| TMP | 11.48 |
| TDI | 43.612 |
| Other Additives | 1.191 |
| Lubricant | 1.91 |
| Cyclohexane | 18.423 |
| Benzoyl Chloride | 0.055 |

| **Mix Ratio** | |
|---|---|
| **A** | **100 parts** |
| **B** | **38.24 parts** |

### Comparative Coating Composition A (35.8 weight percent of Additive 2 in dry coated layer)

| **Reactant Composition A** | |
|---|---|
| **Ingredient** | **Amount (wt. %)** |
| Ethyl Acetate | 68.5131 |
| TIPA | 4.3635 |
| TDI | 3.8344 |
| Polyether diol | 2.9810 |
| Polyether Polyol | 4.6081 |
| Antifoam | 0.0010 |
| Additive 2 | 15.6989 |

| **Reactant Composition B** | |
|---|---|
| **Ingredient** | **Amount (wt. %)** |
| Ethyl Acetate | 23.329 |
| TMP | 11.48 |
| TDI | 43.612 |
| Other Additives | 1.191 |
| Lubricant | 1.91 |
| Cyclohexane | 18.423 |
| Benzoyl Chloride | 0.055 |

| **Mix Ratio** | |
|---|---|
| **A** | **100 parts** |
| **B** | **21.50 parts** |

### Comparative Coating Composition B (24.0 weight percent of Additive 2 in dry coated layer)

| **Reactant Composition A** | |
|---|---|
| **Ingredient** | **Amount (wt. %)** |
| Ethyl Acetate | 69.3954 |
| TIPA | 5.4107 |
| TDI | 4.7546 |
| Polyether diol | 3.6965 |
| Polyether Polyol | 5.7140 |
| Antifoam | 0.0012 |
| Additive 2 | 11.0276 |

| **Reactant Composition B** | |
|---|---|
| **Ingredient** | **Amount (wt. %)** |
| Ethyl Acetate | 23.329 |
| TMP | 11.48 |
| TDI | 43.612 |
| Other Additives | 1.191 |
| Lubricant | 1.91 |
| Cyclohexane | 18.423 |
| Benzoyl Chloride | 0.055 |

| **Mix Ratio** | |
|---|---|
| **A** | **100 parts** |
| **B** | **26.70 parts** |

### Comparative Coating Composition C (14.4 weight percent of Additive 2 in dry coated layer)

| **Reactant Composition A** | |
|---|---|
| **Ingredient** | **Amount (wt. %)** |
| Ethyl Acetate | 70.1831 |
| TIPA | 6.3407 |
| TDI | 5.5718 |
| Polyether diol | 4.3318 |
| Polyether Polyol | 6.6961 |
| Antifoam | 0.0014 |
| Additive 2 | 6.8750 |

| **Reactant Composition B** | |
|---|---|
| **Ingredient** | **Amount (wt. %)** |
| Ethyl Acetate | 23.329 |
| TMP | 11.48 |
| TDI | 43.612 |
| Other Additives | 1.191 |
| Lubricant | 1.91 |
| Cyclohexane | 18.423 |
| Benzoyl Chloride | 0.055 |

| **Mix Ratio** | |
|---|---|
| **A** | **100 parts** |
| **B** | **31.25 parts** |

### Comparative Coating Composition D (6.5 weight percent of Additive 2 in dry coated layer)

| **Reactant Composition A** | |
|---|---|
| **Ingredient** | **Amount (wt. %)** |
| Ethyl Acetate | 70.8255 |
| TIPA | 7.1696 |
| TDI | 6.3003 |
| Polyether diol | 4.8982 |
| Polyether Polyol | 7.5716 |
| Antifoam | 0.0016 |
| Additive 2 | 3.2332 |

| **Reactant Composition B** | |
|---|---|
| **Ingredient** | **Amount (wt. %)** |
| Ethyl Acetate | 23.329 |
| TMP | 11.48 |
| TDI | 43.612 |
| Other Additives | 1.191 |
| Lubricant | 1.91 |
| Cyclohexane | 18.423 |
| Benzoyl Chloride | 0.055 |

| **Mix Ratio** | |
|---|---|
| **A** | **100 parts** |
| **B** | **35.35 parts** |

### Comparative Coating Composition E (1.2 weight percent of Additive 2 in dry coated layer)

| **Reactant Composition A** | |
|---|---|
| **Ingredient** | **Amount (wt. %)** |
| Ethyl Acetate | 71.3905 |
| TIPA | 7.7443 |
| TDI | 6.8053 |
| Polyether diol | 5.2908 |
| Polyether Polyol | 8.1785 |
| Antifoam | 0.0018 |
| Additive 2 | 0.5889 |

| **Reactant Composition B** | |
|---|---|
| **Ingredient** | **Amount (wt. %)** |
| Ethyl Acetate | 23.329 |
| TMP | 11.48 |
| TDI | 43.612 |
| Other Additives | 1.191 |
| Lubricant | 1.91 |
| Cyclohexane | 18.423 |
| Benzoyl Chloride | 0.055 |

| **Mix Ratio** | |
|---|---|
| **A** | **100 parts** |
| **B** | **38.16 parts** |

### Comparative Coating Composition F (24.0 weight percent of Additive 3 in dry coated layer)

| **Reactant Composition A** | |
|---|---|
| **Ingredient** | **Amount (wt. %)** |
| Ethyl Acetate | 69.4229 |
| TIPA | 5.4107 |
| TDI | 4.7546 |
| Polyether diol | 3.6965 |
| Polyether Polyol | 5.7140 |
| Antifoam | 0.0012 |
| Additive 3 | 11.0000 |

| **Reactant Composition B** | |
|---|---|
| **Ingredient** | **Amount (wt. %)** |
| Ethyl Acetate | 23.329 |
| TMP | 11.48 |
| TDI | 43.612 |
| Other Additives | 1.191 |
| Lubricant | 1.91 |
| Cyclohexane | 18.423 |
| Benzoyl Chloride | 0.055 |

| **Mix Ratio** | |
|---|---|
| **A** | **100 parts** |
| **B** | **26.67 parts** |

### Comparative Coating Composition G (16.2 weight percent of Additive 3 in dry coated layer)

| **Reactant Composition A** | |
|---|---|
| **Ingredient** | **Amount (wt. %)** |
| Ethyl Acetate | 70.0662 |
| TIPA | 6.1485 |
| TDI | 5.4030 |
| Polyether diol | 4.2005 |
| Polyether Polyol | 6.4932 |
| Antifoam | 0.0014 |
| Additive 3 | 7.6872 |

| **Reactant Composition B** | |
|---|---|
| **Ingredient** | **Amount (wt. %)** |
| Ethyl Acetate | 23.329 |
| TMP | 11.48 |
| TDI | 43.612 |
| Other Additives | 1.191 |
| Lubricant | 1.91 |
| Cyclohexane | 18.423 |
| Benzoyl Chloride | 0.055 |

| **Mix Ratio** | |
|---|---|
| **A** | **100 parts** |
| **B** | **30.30 parts** |

### Comparative Coating Composition H (9.5 weight percent of Additive 3 in dry coated layer)

| **Reactant Composition A** | |
|---|---|
| **Ingredient** | **Amount (wt. %)** |
| Ethyl Acetate | 70.5349 |
| TIPA | 6.8548 |
| TDI | 6.0236 |
| Polyether diol | 4.6830 |
| Polyether Polyol | 7.2391 |
| Antifoam | 0.0016 |
| Additive 3 | 4.6631 |

| **Reactant Composition B** | |
|---|---|
| **Ingredient** | **Amount (wt. %)** |
| Ethyl Acetate | 23.329 |
| TMP | 11.48 |
| TDI | 43.612 |
| Other Additives | 1.191 |
| Lubricant | 1.91 |
| Cyclohexane | 18.423 |
| Benzoyl Chloride | 0.055 |

| **Mix Ratio** | |
|---|---|
| **A13** | **100 parts** |
| **B** | **33.78 parts** |

### Comparative Coating Composition I (3.8 weight percent of Additive 3 in dry coated layer)

| **Reactant Composition A** | |
|---|---|
| **Ingredient** | **Amount (wt. %)** |
| Ethyl Acetate | 71.1125 |
| TIPA | 7.4596 |
| TDI | 6.5551 |
| Polyether diol | 5.0962 |
| Polyether Polyol | 7.8778 |
| Antifoam | 0.0017 |
| Additive 3 | 1.8971 |

| **Reactant Composition B** | |
|---|---|
| **Ingredient** | **Amount (wt. %)** |
| Ethyl Acetate | 23.329 |
| TMP | 11.48 |
| TDI | 43.612 |
| Other Additives | 1.191 |
| Lubricant | 1.91 |
| Cyclohexane | 18.423 |
| Benzoyl Chloride | 0.055 |

| **Mix Ratio** | |
|---|---|
| **A** | **100 parts** |
| **B** | **36.76 parts** |

### Comparative Coating Composition J (1.2 weight percent of Additive 3 in dry coated layer)

| **Reactant Composition A** | |
|---|---|
| **Ingredient** | **Amount (wt. %)** |
| Ethyl Acetate | 71.3611 |
| TIPA | 7.7443 |
| TDI | 6.8053 |
| Polyether diol | 5.2908 |
| Polyether Polyol | 8.1785 |
| Antifoam | 0.0018 |
| Additive 3 | 0.6183 |

The foregoing discussion describes the synthesis of two components (Reactant Composition A and Reactant Composition B) that might be provided by a coating supplier

| **Reactant Composition B** | |
|---|---|
| **Ingredient** | **Amount (wt. %)** |
| Ethyl Acetate | 23.329 |
| TMP | 1148 |
| TDI | 43.612 |
| Other Additives | 1.191 |
| Lubricant | 1.91 |
| Cyclohexane | 18.423 |
| Benzoyl Chloride | 0.055 |

| **Mix Ratio** | |
|---|---|
| **A** | **100 parts** |
| **B** | **38.17 parts** |

and that can be used to form a polyurethane coating for some embodiments of the present invention. As discussed below, Reactant Composition A and Reactant Composition B can be applied to a film and reacted (e.g., by a film converter) to form the polyurethane coating on the film. For these Examples, the specified amount of Reactant Composition A is mixed with the specified amount of Reactant Composition B (e.g., for Inventive Coating Composition 1, 100 parts of Reactant Composition A to 35.27 parts of Reactant Composition B). The Compositions are mixed together to ensure homogeneity, and are applied onto a target film at a target coating weight. To achieve adequate dynamic viscosity in these Samples, the target solids at application should not be higher 38%. The preferred coating technique is roll applied, either direct or reverse gravure, with or without a smoothing bar. Solvents are then removed by force dry, or air dry heated oven. The urethane reaction of Reactant Composition A and Reactant Composition B commences upon solvent removal. For purposes of these examples, a polyurethane coating formed from Reactant Composition A and Reactant Composition B shall be referred to as a PU Coating.

For the Examples discussed below, after mixing, the mixture is stirred for two minutes to homogenize the mixture. The coating mixture is applied to a polyethylene film from top-to-bottom using a Mayer bar 5 as shown in FIG. 1. The target coating weight for each of the below examples is 2 grams per square meter. The coating is air heated to remove the solvents.

The film used in the examples is a five layer coextruded polyethylene film having the following composition:

| **Layer** | **Component(s) (Nominal Thickness)** | **Density (g/cm³)** | **I₂ (g/10 mins)** | **Peak Melting Temp. (° C)** |
|---|---|---|---|---|
| Top (G) | HDPE (15 microns) | 0.958-0.965 | 0.7-1.0 | 134 |
| Intermediate (F) | HDPE (15 microns) | 0.958-0.965 | 0.7-1.0 | 134 |
| Intermediate (D/E) | LDPE (25microns) | 0.914-0.918 | 0.8-1.2 | 123 |
| Intermediate (B/C) | HDPE (25 microns) | 0.958-0.965 | 0.7-1.0 | 134 |
| Bottom (sealing) (A) | Sealant LLDPE (15 microns) | 0.897-0.902 | 0.75-1.25 | 95 |

Each of the resins is commercially available from The Dow Chemical Company.

A coextruded 5-layer film sample was produced on an Alpine 7-Layer blown film run by using the same polymer feed in two of the 7 layers represented as layers A/B/C/D/E/F/G (as designated in the above table) with the "A" layer (bottom) being in the inside of the bubble. The 5 layer structure is achieved by combining the "B" and "C" layers and the "D" and "e" layers. The individual feed lines are all 50 mm 30:1 L/D grooved feed extruders where each extruder was fed from a 4 component blender. The 7 extruders combined produce a feed to the 75 mm 7-layer flat die (16/16/26/26/16) of 23 kg/hr. The blow up ratio is 2.5:1. The standard frost line height is 30 cm. The film thickness is maintained using an auto profile air ring system and an IBC.

The polyurethane coatings as described above are applied to the top layer of each of the film samples. The polyurethane coatings used different Additives and different Additive amounts as summarized in Table 6:

**Table 6**

| | **Additive 1 (wt. %)** | **Additive 2 (wt. %)** | **Additive 3 (wt. %)** |
|---|---|---|---|
| Film coated with Inventive Coating Composition 1 (Inv. Film 1) | 6.5 | | |
| Film coated with Inventive Coating Composition 2 (Inv. Film 2) | 5.2 | | |
| Film coated with Inventive Coating Composition 3 (Inv. Film 3) | 3.8 | | |
| Film coated with Inventive Coating Composition 4 (Inv. Film 4) | 2.4 | | |
| Film coated with Inventive Coating Composition 5 (Inv. Film 5) | 1.2 | | |
| Film coated with Comparative Coating Composition A (Comp. Film A) | | 35.8 | |
| Film coated with Comparative Coating Composition B (Comp. Film B) | | 24.0 | |
| Film coated with Comparative Coating Composition C (Comp. Film C) | | 14.4 | |
| Film coated with Comparative Coating Composition D (Comp. Film D) | | 6.5 | |
| Film coated with Comparative Coating Composition E (Comp. Film E) | | 1.2 | |
| Film coated with Comparative Coating Composition F (Comp. Film F) | | | 24.0 |
| Film coated with Comparative Coating Composition G (Comp. Film G) | | | 16.2 |
| Film coated with Comparative Coating Composition H (Comp. Film H) | | | 9.5 |
| Film coated with Comparative Coating Composition I (Comp. Film I) | | | 3.8 |
| Film coated with Comparative Coating Composition J (Comp. Film J) | | | 1.2 |

The weight percentages of the Additives represent the weight percent of the Additive in the dry coating.

### Gloss Test

The gloss of each of the Inventive Coated Films and Comparative Films are measured. The gloss test performed is ASTM D2457 using a BYK Gardner Micro-Tri-Gloss Gloss Meter at 45°. The results are shown in Table 7:

**Table 7**

| | **Gloss** |
|---|---|
| Inv. Film 1 (6.5% Additive 1) | 10 |
| Inv. Film 2 (5.2% Additive 1) | 12 |
| Inv. Film 3 (3.8% Additive 1) | 13 |
| Inv. Film 4 (2.4% Additive 1) | 16 |
| Inv. Film 5 (1.2% Additive 1) | 22 |
| Comp. Film A (35.8% Additive 2) | 22 |
| Comp. Film B (24.0% Additive 2) | 24 |
| Comp. Film C (14.4% Additive 2) | 31 |
| Comp. Film D (6.5% Additive 2) | 34 |
| Comp. Film E (1.2% Additive 2) | 37 |
| Comp. Film F (24.0% Additive 3) | 17 |
| Comp. Film G (16.2% Additive 3) | 23 |
| Comp. Film H (9.5% Additive 3) | 25 |
| Comp. Film I (3.8% Additive 3) | 29 |
| Comp. Film J (1.2% Additive 3) | 30 |

A gloss measurement of 11 units or less when measured at 45° is indicative of the coated film having a matte finish. Inv. Film 1 clearly provides a matte finish and Inv. Films 2 and 3 are close. While Inv. Films 4 and 5 do not provide gloss values quite that low, those films still provide other advantages as set forth herein.

### Thermal Resistance Test

The thermal resistances of Inv. Films 1-5 are also evaluated. The thermal resistances are compared to an uncoated polyethylene film (Uncoated Film), a polyethylene film coated with a polyurethane coating as described in Example 1 of WO2016/196168 (Comp. Film K), and a polyethylene film with a water-based matte coating from Siegwerk (Comp. Film L). Thermal resistance is measured using a test based on ASTM F1921-98. In this test, the test specimen is sealed face-to-face using a Sencor sealing machine set up at 2.81 kgf/cm² (40 psi) and 0.5 sec. The temperature is increased from 120° C to 180° C. At each temperature, the film's thermal resistance is rated as "Pass", "Regular", or "Melt." A rating of "Pass" means that there are no visible changes on the coated film surface. A rating of "Regular" means that the sealing area starts to elongate due to the thermal exposure. A rating of "Melt" means that the coated film degraded due to thermal exposure. The results are shown in Table 8:

**Table 8:**

| | **120° C** | **140° C** | **160° C** | **180° C** |
|---|---|---|---|---|
| Inv. Film 1 (6.5% Additive 1) | Pass | Pass | Pass | Pass |
| Inv. Film 2 (5.2% Additive 1) | Pass | Pass | Pass | Regular |
| Inv. Film 3 (3.8% Additive 1) | Pass | Pass | Pass | Regular |
| Inv. Film 4 (2.4% Additive 1) | Pass | Pass | Pass | Regular |
| Inv. Film 5 (1.2% Additive 1) | Pass | Pass | Pass | Regular |
| Uncoated Film | Regular | Melt | Melt | Melt |
| Comp. Film K (No Additive) | Pass | Pass | Pass | Regular |
| Comp. Film L (Water-Based) | Regular | Melt | Melt | Melt |

As shown in Table 8, Inv. Films 1-5 each show a thermal resistance range of 120° C to over 180° C. Comp. Film K has a similar performance to Inv. Films 2-5, but has a glossy surface finish rather than a matte finish. The Uncoated Film and Comp. Film L (water-based coating) each show a thermal resistance range of less than 140° C.

## Claims

1. A coated film comprising:
(a) a film;
(b) a coating on an outer surface of the film comprising polyurethane and a plurality of [(trimethylsilyl)oxy]-modified silica particles; wherein the coating comprises 1.2 to 6.5 weight percent of the [(trimethylsilyl)oxy]-modified silica particles based on the total weight of the dry coating.

2. The coated film of claim 1, wherein the plurality of [(trimethylsilyl)oxy]-modified silica particles have an average particle size (D<50), as measured in accordance with the description, of 1 to 20 microns.

3. The coated film according to any of the preceding claims, wherein the coated outer surface of the film has a gloss of 11 units or less when measured at 45° in accordance with ASTM D2457.

4. The coated film according to any of the preceding claims, wherein the film comprises polyethylene, polypropylene, or a combination thereof.

5. The coated film of claim 4, wherein the film comprises 95 weight percent or more polyethylene based on the total weight of the uncoated film.

6. The coated film according to any of the preceding claims, wherein the coated film is thermally resistant under the sealing conditions of ASTM F1921-98 over a temperature range of 80° C to 200° C.

7. The coated film according to any of the preceding claims, wherein the polyurethane is formed from: (a) a hydroxyl terminated polyol or urethane; and (b) an isocyanate-functional prepolymer.

8. An article comprising the coated film according to any of the preceding claims, wherein the dry coated film has a thickness of 20 to 200 microns.

9. A laminate comprising the coated film according to any of claims 1-7.

## Patentansprüche

1. Beschichtete Folie, umfassend:
(a) eine Folie,
(b) eine Beschichtung auf einer Außenoberfläche der Folie, umfassend Polyurethan und eine Vielzahl von [(trimethylsilyl)oxy]-modifizierten Siliziumdioxidteilchen; wobei die Beschichtung zu 1,2 bis 6,5 Gewichtsprozent die [(trimethylsilyl)oxy]-modifizierten Siliziumdioxidteilchen bezogen auf das Gesamtgewicht der Trockenbeschichtung umfasst.

2. Beschichtete Folie nach Anspruch 1, wobei die Vielzahl von [(trimethylsilyl)oxy]-modifizierten Siliziumdioxidteilchen eine durchschnittliche Teilchengröße (D<50), gemessen gemäß der Beschreibung, von 1 bis 20 Mikrometer aufweisen.

3. Beschichtete Folie nach einem der vorstehenden Ansprüche, wobei die beschichtete Außenoberfläche des Films einen Glanz von 11 Einheiten oder weniger, wenn gemessen bei 45° gemäß ASTM D2457, aufweist.

4. Beschichtete Folie nach einem der vorstehenden Ansprüche, wobei die Folie Polyethylen, Polypropylen oder eine Kombination davon umfasst.

5. Beschichtete Folie nach Anspruch 4, wobei die Folie zu 95 Gew.-% oder mehr Polyethylen, bezogen auf das Gesamtgewicht der unbeschichteten Folie, umfasst.

6. Beschichtete Folie nach Anspruch 1, wobei die beschichtete Folie unter den Versiegelungsbedingungen von ASTM F1921-98 über einen Temperaturbereich von 80° C bis 200° C thermisch beständig ist.

7. Beschichtete Folie nach einem der vorstehenden Ansprüche, wobei das Polyurethan ausgebildet ist aus: (a) einem hydroxylterminierten Polyol oder Urethan; und (b) einem isocyanatfunktionellen Präpolymer.

8. Erzeugnis, umfassend die beschichtete Folie nach einem der vorstehenden Ansprüche, wobei die trockenbeschichtete Folie eine Dicke von 20 bis 200 Mikrometer aufweist.

9. Laminat, umfassend die beschichtete Folie nach einem der Ansprüche 1 bis 7.

## Revendications

1. Film revêtu comprenant :
(a) un film ;
(b) un revêtement sur une surface externe du film comprenant du polyuréthane et une pluralité de particules de silice modifiées [(triméthylsilyl)oxy] ; dans lequel le revêtement comprend de 1,2 à 6,5 pour cent en poids des particules de silice modifiées de [(triméthylsilyl)oxy] sur la base du poids total du revêtement sec.

2. Film revêtu selon la revendication 1, dans lequel la pluralité de particules de silice modifiées de [(triméthylsilyl)oxy] ont une taille moyenne de particules (D < 50), telle que mesurée conformément à la description, de 1 à 20 microns.

3. Film revêtu selon l'une quelconque des revendications précédentes, dans lequel la surface externe revêtue du film a une brillance de 11 unités ou moins lorsqu'elle est mesurée à 45 ° conformément à la norme ASTM D2457.

4. Film revêtu selon l'une quelconque des revendications précédentes, dans lequel le film comprend du polyéthylène, du polypropylène ou une combinaison de ceux-ci.

5. Film revêtu selon la revendication 4, dans lequel le film comprend 95 pour cent en poids ou plus de polyéthylène sur la base du poids total du film non revêtu.

6. Film revêtu selon l'une quelconque des revendications précédentes, dans lequel le film revêtu est résistant thermiquement dans les conditions d'étanchéité de la norme ASTM F1921-98 sur une plage de température allant de 80 °C à 200 °C.

7. Film revêtu selon l'une quelconque des revendications précédentes, dans lequel le polyuréthane est formé à partir : (a) d'un polyol ou uréthane à terminaison hydroxyle ; et (b) d'un prépolymère à fonction isocyanate.

8. Article comprenant le film revêtu selon l'une quelconque des revendications précédentes, dans lequel le film revêtu sec a une épaisseur allant de 20 à 200 microns.

9. Stratifié comprenant le film revêtu selon l'une quelconque des revendications 1 à 7.
